# EUROPEAN PATENT APPLICATION

(11) **EP 4 715 998 A1**
(43) Date of publication of application: **25.03.2026**
(21) Application number: 25196922.6
(22) Date of filing: 20.08.2025
(51) Int. Cl.: H01M 50/533, H01M 50/54, H01M 50/586, H01M 50/595

(54) **SECONDARY BATTERY**

(30) Priority: 24.09.2024 KR 20240128813
(71) Applicant: SAMSUNG SDI CO., LTD., Yongin-si, Gyeonggi-do 17084 (KR)
(72) Inventor: LEE, Younghwan, Yongin-si, Gyeonggi-do 17084 (KR)
(74) Representative: Bardehle Pagenberg Partnerschaft mbB Patentanwälte Rechtsanwälte

(57) **Abstract**

The present disclosure provides a secondary battery. A secondary battery according to the present disclosure includes an electrode assembly including a plurality of first electrode tabs and a plurality of second electrode tabs, and a collector plate joined to the plurality of first electrode tabs, in which the plurality of first electrode tabs includes a first tab group, the first tab group is joined to the collector plate while at least some of the plurality of first electrode tabs of the first tab group are bent in a first direction and others of the plurality of first electrode tabs of the first tab group are bent in a second direction, and the first direction and the second direction are substantially parallel to a stacking direction of the electrode assembly and are substantially opposite to one another.

## Description

The present application claims priority to and the benefit of Korean Patent Application No. 10-2024-0128813 filed on 24 September 2024, the entire contents of which is incorporated by reference.

### FIELD

The present disclosure relates to a secondary battery.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The electrodes of an electrode assembly and the electrode terminals of a case may be electrically connected through the collector plate. The electrode includes an electrode tab, and the collector plate may electrically connect the electrode and the electrode terminal through contact with the electrode tab. Here, the collector plate may be brought into contact with the electrode tab by welding. In this case, the electrode tab may not be welded to the collector plate, which may result in an electrode that is not welded to the collector plate. Such unwelded electrodes may cause a problem in which the internal resistance of the secondary battery increases.

The above information disclosed in this Background section is for enhancement of understanding of the background of the present disclosure, and therefore, it may contain information that does not constitute related (or prior) art.

### SUMMARY

The problem to be solved by the present disclosure is to provide a secondary battery for solving the technical problem, e.g. as outlined above.

In accordance with the present disclosure, a secondary battery as set forth in independent claim 1, is provided to solve the above problem at least in part. Currently preferred embodiments are described in the dependent claims. These and other aspects and features of the present disclosure will be described in or will be apparent from the following description of embodiments of the present disclosure.

According to embodiments of the present disclosure for solving the technical problem, there is provided a secondary battery including an electrode assembly including a plurality of first electrode tabs and a plurality of second electrode tabs, and a collector plate joined to the plurality of first electrode tabs, in which the plurality of first electrode tabs includes a first tab group, the first tab group is joined to the collector plate while at least some of the first electrode tabs of the first tab group are bent in a first direction and others of the first electrode tabs of the first tab group are bent in a second direction, and the first direction and the second direction are substantially parallel to a stacking direction of the electrode assembly and are substantially opposite to one another.

In some examples, the plurality of second electrode tabs may be optional. Additionally or alternatively, in some examples, the first direction and the second direction may be substantially parallel to a stacking direction of the electrode assembly and/or be substantially opposite to one another.

According to embodiments, the plurality of first electrode tabs may be connected to a positive electrode, and the plurality of second electrode tabs may be connected to a negative electrode.

According to embodiments, a plurality of first electrode tabs may be joined to the collector plate by laser welding.

According to embodiments, the collector plate may include one or more joints to which a plurality of first electrode tabs are joined.

According to embodiments, at least some of the plurality of first electrode tabs may be welded to the joints, and/or the ends of the plurality of first electrode tabs protruding outside the collector plate may be folded to surround the collector plate.

According to embodiments, the secondary battery may further include a tape disposed to cover the electrode assembly and/or the collector plate.

According to embodiments, a material of the tape may include an insulating material.

According to embodiments, the plurality of first electrode tabs and the plurality of second electrode tabs may be formed on different sides of the electrode assembly.

According to embodiments, the joints may include a first joint and a second joint each formed spaced apart from the center of the collector plate.

According to embodiments, a length of the first joint in a longitudinal direction of the collector plate may be approximately equal to a length of the second joint.

According to embodiments, the plurality of first electrode tabs may further include a second tab group spaced apart from the first tab group by a predetermined distance, and optionally a third tab group spaced apart from the second tab group by a predetermined distance.

According to embodiments, an interval between the first tab group and the second tab group may be greater than an interval between the second tab group and the third tab group.

According to embodiments, a width of the first tab group may be greater than a width of the second tab group and/or a width of the third tab group.

According to embodiments, the first tab group may be located to correspond to the first joint, and the second tab group and/or the third tab group may be located to correspond to the second joint.

According to embodiments, the plurality of first electrode tabs of the second tab group may be bent in the first direction and joined to the collector plate, and/or the plurality of first electrode tabs of the third tab group may be bent in the second direction and joined to the collector plate.

According to embodiments, the plurality of first electrode tabs may further include a fourth tab group spaced apart from the third tab group by a predetermined interval.

According to embodiments, an interval between the first tab group and the second tab group and an interval between the third tab group and the fourth tab group may be smaller than an interval between the second tab group and the third tab group.

According to embodiments, a width of the first tab group, a width of the second tab group, a width of the third tab group, and/or a width of the fourth tab group may be approximately identical to each other.

According to embodiments, the first tab group and the second tab group may be located to correspond to the first joint, and/or the third tab group and the fourth tab group may be located to correspond to the second joint.

According to embodiments, the plurality of first electrode tabs of the second tab group may be bent in the first direction and joined to the collector plate, the plurality of first electrode tabs of the third tab group may be bent in the second direction and joined to the collector plate, and/or the plurality of first electrode tabs of the fourth tab group may be joined to the collector plate while optionally at least some of the plurality of first electrode tabs of the fourth tab group are bent in the first direction and others of the plurality of electrode tabs of the fourth tab group are bent in the second direction.

According to some embodiments of the present disclosure, a secondary battery with improved stability may be provided.

According to some embodiments of the present disclosure, the plurality of electrode tabs may be bent in different directions and welded to the collector plate, so that a plurality of electrode tabs may be complementary to one another to provide a secondary battery with improved electrical stability.

According to some embodiments of the present disclosure, the number of unwelded electrodes may be reduced by welding the plurality of first electrode tabs of the first tab group to the collector plate while at least some and the others of the plurality of first electrode tabs of the first tab group are bent in different directions, thereby reducing the internal resistance of the secondary battery.

According to some embodiments of the present disclosure, the number of unwelded electrodes may be reduced by welding the plurality of first electrode tabs of the first tab group to the collector plate while at least some and the others of the plurality of first electrode tabs of the first tab group are bent in different directions, so that the current flowing through the substrate may be uniformly distributed, thereby reducing deterioration of the secondary battery.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view showing an example of a secondary battery according to embodiments of the present disclosure.
FIG. 2 is a perspective view showing an example of the inside of an S portion of the secondary battery shown in FIG. 1 when disassembled.
FIG. 3 is a perspective view showing an example of a collector plate according to embodiments of the present disclosure.
FIG. 4 is a perspective view showing an example of an electrode assembly including two tab groups according to embodiments of the present disclosure.
FIG. 5 is a perspective view showing an example before two tab groups are joined to a collector plate according to embodiments of the present disclosure.
FIG. 6 is a cross-sectional view showing an example in which the two tab groups are joined to the collector plate according to embodiments of the present disclosure.
FIG. 7 is a perspective view showing an example of an electrode assembly including three tab groups according to embodiments of the present disclosure.
FIG. 8 is a perspective view showing an example before three tab groups are joined to a collector plate according to embodiments of the present disclosure.
FIG. 9 is a cross-sectional view showing an example in which the three tab groups are joined to the collector plate according to embodiments of the present disclosure.
FIG. 10 is a perspective view showing an example in which three tab groups are folded to surround a collector plate according to embodiments of the present disclosure.
FIG. 11 is a perspective view showing an example of an electrode assembly including four tab groups according to embodiments of the present disclosure.
FIG. 12 is a perspective view showing an example before four tab groups are joined to a collector plate according to embodiments of the present disclosure.
FIG. 13 is a cross-sectional view showing an example in which the four tab groups are joined to the collector plate according to embodiments of the present disclosure.
FIG. 14 is a perspective view showing an example in which four tab groups are folded to surround a collector plate according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In this disclosure, the sizes and relative sizes of layers and regions shown in the drawings may be exaggerated for clarity of explanation. That is, the sizes shown in the drawings are only for convenience of understanding and are not limited thereto. In addition, identical reference numerals throughout the specification refer to identical components.

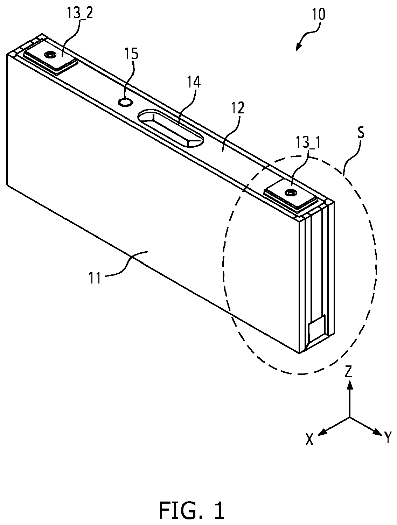

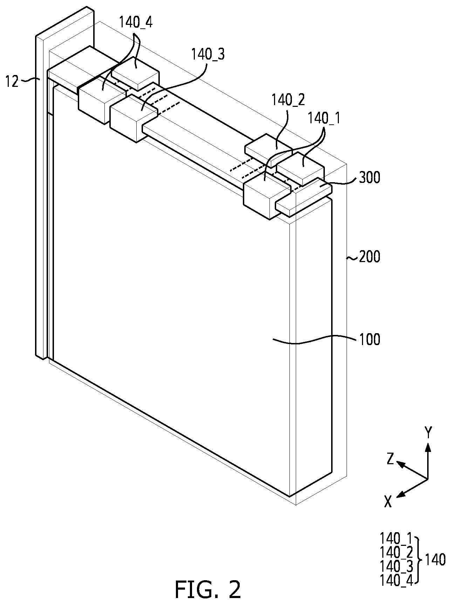

FIG. 1 is a perspective view showing an example of a secondary battery according to embodiments of the present disclosure, and FIG. 2 is a perspective view showing an example of the inside of an S portion of the secondary battery shown in FIG. 1 when disassembled.

Referring to FIGS. 1 and 2, the secondary battery 10 may include an electrode assembly 100, a collector plate 300, a case 11 in which the electrode assembly 100 is incorporated, and a cap plate 12 coupled to an open one end of the case 11. The secondary battery 10 may further include a tape 200 disposed to cover the electrode assembly 100 and the collector plate 300. The secondary battery 10 shown in FIG. 1 may be a square secondary battery, but the secondary battery 10 according to the present disclosure is not limited thereto and may be various types of secondary batteries.

The electrode assembly 100 may be formed by winding or stacking a positive electrode, a negative electrode, and a separator, which is an insulator, interposed between the positive electrode and the negative electrode. The positive electrode may have the positive tab connected to one side, and the negative electrode may have the negative tab connected to one side. The positive tab and the negative tab may be electrically connected to a first electrode terminal 13_1 and a second electrode terminal 13_2, respectively, formed on the cap plate 12. The first electrode terminal 13_1 and the second electrode terminal 13_2 formed on the cap plate may be electrically connected to a bus bar.

According to embodiments, the electrode assembly 100 may include a plurality of electrode tabs 140. Some of the plurality of electrode tabs 140 may be connected to the positive electrode, and the others may be connected to the negative electrode.

The case 11 may form the overall outer appearance of the secondary battery 10 and may be made of a conductive metal, such as aluminum, aluminum alloy, stainless steel, iron or nickel-plated steel. In addition, the case 11 may provide a space in which the electrode assembly is accommodated. The case 11 may be a square case, and the secondary battery 10 may be a square secondary battery. However, the scope of the present disclosure is not limited thereto, and the secondary battery 10 may be a secondary battery of any shape, such as a square shape, a cylindrical shape, a pouch shape, etc.

The case 11 may include long side wall portions facing each other and short side wall portions facing each other. The long side wall portions may include a first long side wall portion and a second long side wall portion. The first long side wall portion and the second long side wall portion may face each other. The first side wall portion and the second side wall portion may be spaced apart from each other and face each other. The short side wall portions may include a first short side wall portion and a second short side wall portion. The first short side wall portion and the second short side wall portion may be spaced apart from each other and face each other. The area of each of the first short side wall portion and the second short side wall portion may be smaller than the area of each of the first long side wall portion and the second long side wall portion.

The cap plate 12 is combined with an open one end of the case 11 to seal the case 11. Specifically, the top of the case 11 may be opened, and the cap plate 12 may seal the open top of the case 11. Similar to the case 11, the cap plate 12 may be made of a conductive material.

The first electrode terminal 13_1 and the second electrode terminal 13_2 may be combined with the cap plate 12. For example, the first electrode terminal 13_1 and the second electrode terminal 13_2 may be installed to protrude outwardly through the cap plate 12. The first electrode terminal 13_1 may be electrically connected to the positive electrode, and the second electrode terminal 13_2 may be electrically connected to the negative electrode.

The first electrode terminal 13_1 may be electrically connected to the positive electrode through the positive electrode collector plate. The positive electrode collector plate may electrically connect the positive electrode and the first electrode terminal 13_1 through contact with the positive electrode non-coated portion or the positive electrode tab extending from or coupled to the positive electrode non-coated portion.

The second electrode terminal 13_2 may be electrically connected to the negative electrode through the negative electrode collector plate. The negative electrode collector plate may electrically connect the negative electrode and the second electrode terminal 13_2 through contact with the negative electrode non-coated portion or the negative electrode tab extending from or coupled to the negative electrode non-coated portion.

According to embodiments, the collector plate 300 may be joined to a plurality of first electrode tabs 140 of the electrode assembly 100. Specifically, a plurality of first electrode tabs 140 may be joined to the collector plate 300 by laser welding.

FIG. 2 shows the structure of a plurality of first electrode tabs 140 electrically connected to the first electrode terminal 13_1 of the secondary battery 10 shown in FIG. 1. The first electrode terminal 13_1 may be electrically connected to the first electrode through the collector plate 300. The collector plate 300 may electrically connect the first electrode and the first electrode terminal 13_1 through contact with the plurality of first electrode tabs 140.

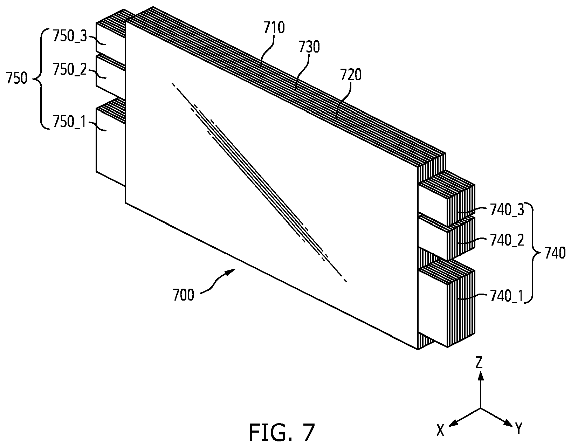

The plurality of first electrode tabs 140 include a first tab group 140_1. The first tab group 140_1 may be joined to the collector plate 300 while at least some of the first tab group 140_1 may be bent in a first direction and the others may be bent in a second direction. The first direction and the second direction are parallel to the stacking direction of the electrode assembly 100 and may be opposite to one another. This will be described in more detail later with reference to FIGS. 7 to 14.

According to embodiments, the collector plate 300 may include joints to which a plurality of first electrode tabs 140 are joined. At least some of the plurality of first electrode tabs 140 are welded to the joints, and the ends of the plurality of first electrode tabs 140 protruding outside the collector plate 300 may be folded to surround the collector plate.

According to embodiments, the tape 200 may be disposed to cover the electrode assembly 100 and the collector plate 300. The tape 200 may include an insulating material. The insulating material may insulate the electrode assembly 100 and the case 11 and insulate the collector plate 300 and the case 11 to prevent current flow and short circuit.

In relation to the electrical insulation properties described above, the materials of the tape 200 may include at least one of polypropylene sulfide (PPS), polyamide (PI), polyethylene terephthalate (PET), polyethylene (PE), polypropylene (PP), and polyphenylene ether (PPE), which have high heat resistance and do not undergo deformation such as shrinkage even at high temperatures.

The vent portion 14 may be formed on at least one side of the secondary battery 10. As shown in FIG. 1, the vent portion 14 may be formed on the upper surface of the secondary battery 10, for example, on the cap plate 12. The vent portion 14 may be configured to open when an internal pressure exceeding a predetermined threshold pressure occurs in the secondary battery 10.

An electrolyte injection port 15 may be formed in the cap plate 12. For example, the electrolyte injection port 15 may be a hole formed in the cap plate 12. After the cap plate 12 is joined to the opening of the case 11 and sealed, the electrolyte injection port 15 may be formed to inject electrolyte into the interior of the case 11. The electrolyte injection port 15 may be sealed with a sealing member after the electrolyte is injected.

In addition, an insulation member may be installed between the electrode assembly 100 and the cap plate 12.

The secondary battery 10 may be a lithium secondary battery, a sodium secondary battery, or the like. However, the scope of the present disclosure is not limited thereto, and the secondary battery 10 may include all batteries that can repeatedly provide electricity by charging and discharging. In embodiments, when the secondary battery 10 is a lithium secondary battery, it may be used in an electric vehicle (EV) because it has excellent life characteristics and high-rate characteristics. In some embodiments, it may be used in hybrid vehicles such as plug-in hybrid electric vehicles (PHEV). The lithium secondary battery may be used in applications that require large amounts of power storage. For example, the lithium secondary battery may be used in electric bicycles, power tools, or the like.

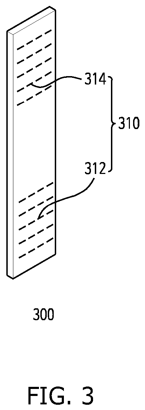

FIG. 3 is a perspective view showing an example of a collector plate according to embodiments of the present disclosure.

Referring to FIG. 3, the collector plate 300 may include joints 310 to which a plurality of first electrode tabs 140 (see FIG. 2) are joined.

According to embodiments, the collector plate 300 may be electrically connected to the electrode assembly 100 (see FIG. 2). Specifically, a plurality of first electrode tabs 140 of the electrode assembly 100 may be electrically connected to the front and rear surfaces of the collector plate 300.

According to embodiments, the collector plate 300 may include a conductive material. For example, the collector plate 300 may include copper Cu. The material of the collector plate 300 is not limited thereto.

The parts where the collector plate 300 and the electrode tabs 140 are electrically connected may correspond to the joints 310. The joints 310 may correspond to welding parts. The joints 310 may be formed on the front surface and/or rear surface of the collector plate 300. According to embodiments, the plurality of first electrode tabs 140 of the electrode assembly 100 and the collector plate 300 may be joined to each other at the joints 310 by laser welding or ultrasonic welding. Accordingly, the collector plate 300 may be joined to a plurality of first electrode tabs 140 to represent a positive electrode or negative electrode.

According to embodiments, the joints 310 may include a first joint 312 and a second joint 314 each formed spaced apart from the center of the collector plate 300. In the longitudinal direction of the collector plate 300, the length of the first joint 312 may be equal to the length of the second joint 314.

The sizes and shapes of the collector plate 300 and the joints 310 are not limited thereto, and the collector plate 300 and the joints 310 may have various sizes and shapes.

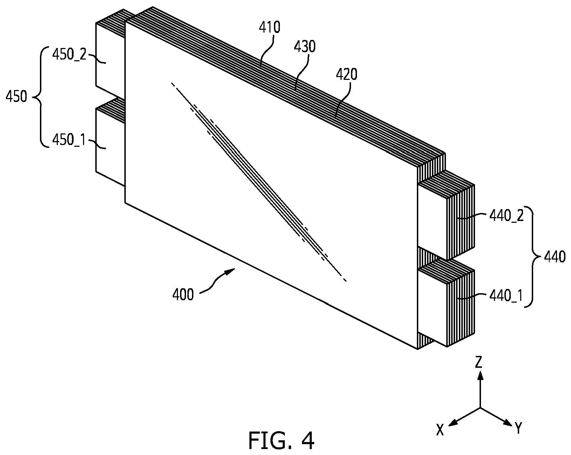

FIG. 4 is a perspective view showing an example of an electrode assembly including two tab groups according to embodiments of the present disclosure.

Referring to FIG. 4, the electrode assembly 400 may include a first electrode plate 410, a second electrode plate 420, and a separator 430 interposed between the first electrode plate 410 and the second electrode plate 420. The first electrode plate 410, the second electrode plate 420, and the separator 430 may each be formed in a thin plate shape or a film shape. The electrode assembly 100 may be formed by alternately stacking a first electrode plate 410 and a second electrode plate 420 with a separator 430 therebetween, which are a plurality of sheets.

A first electrode tab 440 may be formed on one side of the first electrode plate 410, and a second electrode tab 450 may be formed on one side of the second electrode plate 420. As shown in FIG. 4, in a stacked state, the first electrode tab 440 may be formed on one side of the electrode assembly 400, and the second electrode tab 450 may be formed on the other side of the electrode assembly 400. When the first electrode plate 410 is formed as a positive electrode plate, the first electrode tab 440 may be formed as a positive electrode tab, and when the second electrode plate 420 is formed as a negative electrode plate, the second electrode tab 450 may be formed as a negative electrode tab. In some embodiments, when the polarities of the first electrode plate 410 and the second electrode plate 420 are reversed, the first electrode tab 440 may be formed as a negative electrode tab, and the second electrode tab 450 may be formed as a positive electrode tab.

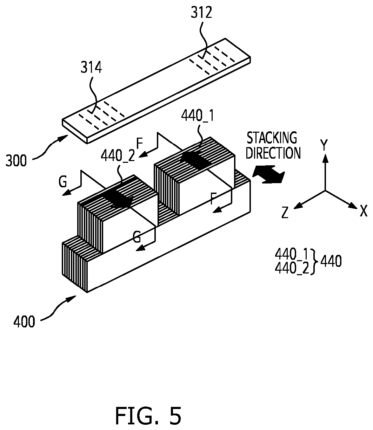

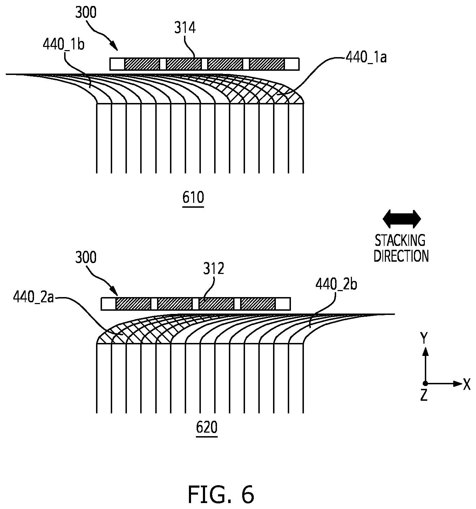

FIG. 5 is a perspective view showing an example before two tab groups are joined to a collector plate according to embodiments of the present disclosure, and FIG. 6 is a cross-sectional view showing an example in which the two tab groups are joined to the collector plate according to embodiments of the present disclosure. FIG. 6 shows an example of a cross-section 610 taken along line F-F and a cross-section 620 taken along line G-G of FIG. 5 as viewed in the Z-axis direction.

For the convenience of explanation below, the first electrode tab is used as a reference, and although not shown, the second electrode tab may also be explained in the same way as the first electrode tab.

Referring to FIGS. 5 and 6, the first electrode tab 440 may be protruded and aligned on one side of the electrode assembly 400. The first electrode tab 440 may include a first tab group 440_1 and a second tab group 440_2. The first tab group 440_1 and the second tab group 440_2 may be welded to the collector plate 300 and electrically connected to the collector plate 300. The first tab group 440_1 and the second tab group 440_2 may be bent in a direction parallel to the stacking direction (X-axis direction) of the electrode assembly 400 for welding. Thereafter, the collector plate 300 may be laser welded or ultrasonically welded in close contact with the folded surfaces of the first tab group 440_1 and the second tab group 440_2.

A cross-section 610 taken along line F-F of FIG. 5 is shown in FIG. 6. As shown in the cross section 610, the first tab group 440_1 may be bent to the left. A cross-section 620 taken along line G-G of FIG. 5 is shown in FIG. 6. As shown in the cross section 620, the second tab group 440_2 may be bent to the right. That is, the first tab group 440_1 and the second tab group 440_2 of the electrode assembly 400 may be bent in opposite directions.

After the first tab group 440_1 and the second tab group 440_2 are bent in opposite directions, the collector plate 300 may be disposed on the upper side of the first tab group 440_1 and the second tab group 440_2 and welded by laser welding. Accordingly, the first tab group 440_1 and the second tab group 440_2 may be electrically connected to the collector plate 300.

As shown in FIG. 6, the first tab group 440_1 may be laser welded to the first joint 312 of the collector plate 300, and the second tab group 440_2 may be laser welded to the second joint 314 of the collector plate 300. After laser welding is completed, the first tab group 440_1 and the second tab group 440_2 may protrude outside the collector plate 300.

As shown in the cross-section 610, the first tab group 440_1 may include welded tabs 440_1a welded to the collector plate 300 and unwelded tabs 440_1b. As shown in the cross-section 620, the second tab group 440_2 may include welded tabs 440_2a welded to the collector plate 300 and unwelded tabs 440_2b.

Some of the unwelded tabs 440_1b of the first tab group 440_1 are complemented by the welded tabs 440_2a of the second tab group 440_2, so that the electrode plate connected to the tabs may be electrically connected to the collector plate. Similarly, some of the unwelded tabs 440_2b of the second tab group 440_2 are complemented by the welded tabs 440_1a of the first tab group 440_1, so that the electrode plate connected to the tabs may be electrically connected to the collector plate.

However, the central portion of the first tab group 440_1 and the central portion of the second tab group 440_2 are not welded to the collector plate 300, thereby not being complementary to each other. Therefore, the first electrode plate 410 (see FIG. 4) located at the center of the electrode assembly 400 may not be welded to the collector plate 300. This may cause the internal resistance of the secondary battery to increase and the current flowing through the substrate to become unevenly distributed.

FIG. 7 is a perspective view showing an example of an electrode assembly including three tab groups according to embodiments of the present disclosure.

Referring to FIG. 7, the electrode assembly 700 may include a first electrode plate 710, a second electrode plate 720, and a separator 730 interposed between the first electrode plate 710 and the second electrode plate 720. The first electrode plate 710, the second electrode plate 720, and the separator 730 may each be formed in a thin plate shape or a film shape. The electrode assembly 700 may be formed by alternately stacking a first electrode plate 710 and a second electrode plate 720 with a separator 730 therebetween, which are a plurality of sheets. In addition, the electrode assembly 700 may be a Z-stack electrode assembly in which the first electrode plate 710 and the second electrode plate 720 are inserted into both sides of a separator, which is then bent into a Z-stack.

The first electrode plate 710 and the second electrode plate 720 are shown as having the same size in FIG. 7, but the two electrode plates may have different sizes. The sizes of the first electrode plate 710 and the second electrode plate 720 may be different from each other, resulting in an overhang. For example, the area of the negative plate may be larger than the area of the positive plate.

FIG. 7 is an example schematically showing the stacked structure of a stacked electrode assembly 700, and the number or size of electrode plates is not limited thereto. The outermost part of the electrode assembly 700 may be finished with a first electrode plate 710 or a second electrode plate 720. The first electrode plate 710 may be formed as a positive electrode plate, and the second electrode plate 720 may be formed as a negative electrode plate, or vice versa.

When the first electrode plate 710 is formed as a positive electrode plate, the first electrode plate 710 may be formed by applying a positive electrode active material layer containing a lithium-based oxide as a main component to both sides of a positive electrode current collector made of a thin aluminum foil. In some embodiments, a positive electrode non-coated portion, which is a region where the positive electrode active material layer is not coated, may be formed at both ends of the positive electrode current collector.

When the second electrode plate 720 is formed as a negative electrode plate, the second electrode plate 720 may be formed by applying a negative electrode active material layer mainly containing carbon material to both sides of a negative electrode current collector made of a thin copper foil. In some embodiments, a negative electrode non-coated portion, which is a region where the negative electrode active material layer is not coated, may be formed at both ends of the negative electrode current collector.

According to embodiments, the electrode assembly 700 may include a plurality of first electrode tabs 740 and a plurality of second electrode tabs 750.

According to embodiments, the plurality of first electrode tabs 740 may be formed on one side of the first electrode plate 710, and the plurality of second electrode tabs 750 may be formed on one side of the second electrode plate 720. The plurality of first electrode tabs 740 and the plurality of second electrode tabs 750 may be formed by welding tabs to the non-coated portions of the first electrode plate 710 and the second electrode plate 720, or may be formed by punching out the non-coated portions of the first electrode plate 710 and the second electrode plate 720.

According to embodiments, the plurality of first electrode tabs 740 and the plurality of second electrode tabs 750 in a stacked state may be formed on different sides of the electrode assembly 700. When the first electrode plate 710 is formed as a positive electrode plate, the plurality of first electrode tabs 740 may be formed as positive electrode tabs, and when the second electrode plate 720 is formed as a negative electrode plate, the plurality of second electrode tabs 750 may be formed as negative electrode tabs. In some embodiments, where the polarities of the first electrode plate 710 and the second electrode plate 720 are reversed, it goes without saying that the plurality of first electrode tabs 740 may be formed as negative electrode tabs, and the plurality of second electrode tabs 750 may be formed as positive electrode tabs.

According to embodiments, the plurality of first electrode tabs 740 may include a first tab group 740_1, a second tab group 740_2 spaced apart from the first tab group 740_1 by a predetermined interval, and a third tab group 740_3 spaced apart from the second tab group 740_2 by a predetermined interval.

According to embodiments, the interval between the first tab group 740_1 and the second tab group 740_2 may be greater than the interval between the second tab group 740_2 and the third tab group 740_3. However, the intervals among the first tab group 740_1, the second tab group 740_2, and the third tab group 740_3 are not limited to the embodiment and may be various.

According to embodiments, the width of the first tab group 740_1 may be greater than the width of the second tab group 740_2 and the width of the third tab group 740_3. However, the width of each of the first tab group 740_1, the second tab group 740_2, and the third tab group 740_3 is not limited to the embodiment and may be various.

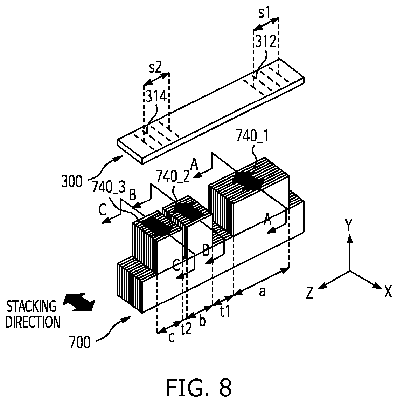

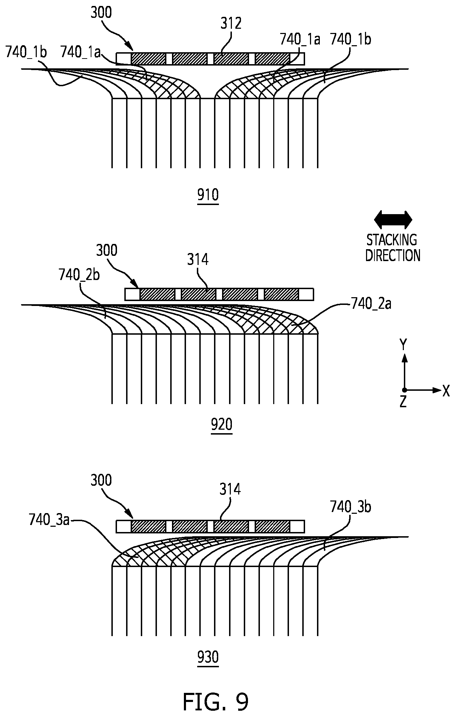

FIG. 8 is a perspective view showing an example before three tab groups are joined to a collector plate according to embodiments of the present disclosure, and FIG. 9 is a cross-sectional view showing an example in which the three tab groups are joined to the collector plate according to embodiments of the present disclosure. FIG. 9 shows examples of a cross-section 910 taken along line A-A of FIG. 8, a cross-section 920 taken along line B-B, and a cross-section 930 taken along line C-C, as viewed in the Z-axis direction.

Referring to FIGS. 8 and 9, a plurality of first electrode tabs 740 may be protruded and aligned on one side of the electrode assembly 700. According to embodiments, the plurality of first electrode tabs 740 may include a first tab group 740_1, a second tab group 740_2, and a third tab group 740_3. The first tab group 740_1, the second tab group 740_2, and the third tab group 740_3 may be welded to the collector plate 300 and electrically connected to the collector plate 300.

According to embodiments, the collector plate 300 may include joints 310 to which a plurality of first electrode tabs 740 are joined. The joints 310 may include a first joint 312 and a second joint 314 each formed spaced apart from the center of the collector plate 300. In the longitudinal direction (Z-axis direction) of the collector plate 300, the length s1 of the first joint 312 may be equal to the length s2 of the second joint 314.

According to embodiments, the second tab group 740_2 may be spaced apart from the first tab group 740_1 by a predetermined interval, and the third tab group 740_3 may be spaced apart from the second tab group 740_2 by a predetermined interval. Specifically, the interval t1 between the first tab group 740_1 and the second tab group 740_2 may be greater than the interval t2 between the second tab group 740_2 and the third tab group 740_3. In this case, the interval between the first tab group 740_1 and the third tab group 740_3 may be equal to the sum of the interval t1 between the first tab group 740_1 and the second tab group 740_2, the width b of the second tab group 740_2, and the interval t2 between the second tab group 740_2 and the third tab group 740_3. However, the intervals among the first tab group 740_1, the second tab group 740_2, and the third tab group 740_3 are not limited to the embodiment and may be various.

According to embodiments, the width a of the first tab group 740_1 may be greater than the width b of the second tab group 740_2 and the width c of the third tab group 740_3. As another example, the width b of the second tab group 740_2 may be greater than the width a of the first tab group 740_1 and the width c of the third tab group 740_3. The width c of the third tab group 740_3 may be greater than the width a of the first tab group 740_1 and the width b of the second tab group 740_2.

According to embodiments, the first tab group 740_1 may be located to correspond to the first joint 312, and the second tab group 740_2 and the third tab group 740_3 may be located to correspond to the second joint 314. Based on the Z-axis direction, the right end of the first tab group 740_1 may be located to the right of the right end of the first joint 312, and the left end of the first tab group 740_1 may be located to the left of the left end of the first joint 312. Based on the Z-axis direction, the right end of the second tab group 740_2 may be located to the right of the right end of the second joint 314, and the left end of the second tab group 740_2 may be located to the left of the right end of the second joint 314. Based on the Z-axis direction, the right end of the third tab group 740_3 may be located to the right of the left end of the second joint 314, and the left end of the third tab group 740_3 may be located to the left of the left end of the second joint 314. However, the positions of the first tab group 740_1, the second tab group 740_2, and the third tab group 740_3 are not limited to the embodiment and may be various.

According to embodiments, the first tab group 740_1, the second tab group 740_2, and the third tab group 740_3 may be bent in a direction parallel to the stacking direction (X-axis direction) of the electrode assembly 700 for welding. Thereafter, the collector plate 300 may be laser welded or ultrasonically welded in close contact with the folded surfaces of the first tab group 740_1, the second tab group 740_2, and the third tab group 740_3.

According to embodiments, a cross-section 910 taken along line A-A of FIG. 8 is shown in FIG. 9. As shown in the cross-section 910, the first tab group 740_1 may be joined to the collector plate while at least some of the first tab group 740_1 may be bent in the first direction and the others may be bent in the second direction. A cross-section 920 taken along line B-B of FIG. 8 is shown in FIG. 9. As shown in the cross section 920, the second tab group 740_2 may be bent in the first direction and joined to the collector plate. A cross-section 930 taken along line C-C of FIG. 8 is shown in FIG. 9. As shown in the cross section 930, the third tab group 740_3 may be bent in the second direction and joined to the collector plate. The first direction and the second direction are parallel to the stacking direction (X-axis direction) of the electrode assembly 700 and may be opposite to one another.

According to embodiments, after the first tab group 740_1, the second tab group 740_2, and the third tab group 740_3 are bent, the collector plate 300 may be disposed on the upper sides of the first tab group 740_1, the second tab group 740_2, and the third tab group 740_3 and welded by laser welding. Accordingly, the first tab group 740_1, the second tab group 740_2, and the third tab group 740_3 may be electrically connected to the collector plate 300.

According to embodiments, as shown in FIG. 9, the first tab group 740_1 may be laser welded to the first joint 312 of the collector plate 300, and the second tab group 740_2 and the third tab group 740_3 may be laser welded to the second joint 314 of the collector plate 300. After laser welding is completed, the first tab group 740_1, the second tab group 740_2, and the third tab group 740_3 may protrude outside the collector plate 300.

According to embodiments, as shown in the cross-section 910, the first tab group 740_1 may include welded tabs 740_1a welded to the collector plate 300 and unwelded tabs 740_1b. As shown in the cross-section 920, the second tab group 740_2 may include welded tabs 740_2a welded to the collector plate 300 and unwelded tabs 740_2b. As shown in the cross-section 930, the third tab group 740_3 may include welded tabs 740_3a welded to the collector plate 300 and unwelded tabs 740_3b.

Due to the structural features described above, the unwelded tabs 740_1b of the first tab group 740_1 are complemented by the welded tabs 740_2a of the second tab group 740_2 and the welded tabs 740_3a of the third tab group 740_3, so that the electrode plate connected to the tabs may be electrically connected to the collector plate. The unwelded tabs 740_2b of the second tab group 740_2 are complemented by the welded tabs 740_1a of the first tab group 740_1 and the welded tabs 740_3a of the third tab group 740_3, so that the electrode plate connected to the tabs may be electrically connected to the collector plate. The unwelded tabs 740_3b of the third tab group 740_3 are complemented by the welded tabs 740_1a of the first tab group 740_1 and the welded tabs 740_2a of the second tab group 740_2, so that the electrode plate connected to the tabs may be electrically connected to the collector plate. Due to this, the number of first electrode plates 710 (see FIG. 7) that are not welded to the collector plate 300 may be reduced, thereby reducing the internal resistance of the secondary battery. In some embodiments, the current flowing through the substrate is evenly distributed, which may reduce deterioration of the secondary battery.

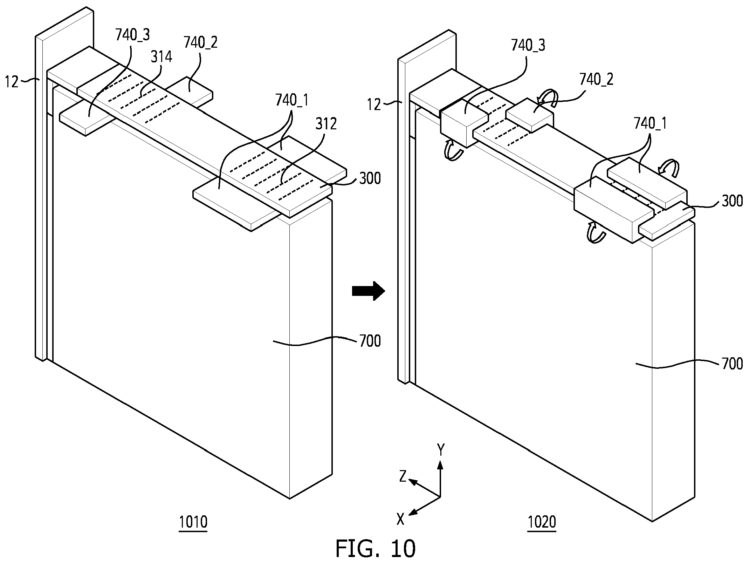

FIG. 10 is a perspective view showing an example in which three tab groups are folded to surround a collector plate according to embodiments of the present disclosure.

Referring to FIG. 10, at least some of the plurality of first electrode tabs 740_1, 740_2, 740_3 are welded to the joints 312, 314, and the ends of the plurality of first electrode tabs 740_1, 740_2, 740_3 protruding outside the collector plate 300 may be folded to surround the collector plate 300.

According to embodiments, after laser welding is completed, the ends of the plurality of first electrode tabs 740_1, 740_2, 740_3 protrude in the width direction (X-axis direction) of the collector plate 300, and the protruding ends of the plurality of first electrode tabs 740_1, 740_2, 740_3 may be folded upward (Y-axis direction) of the collector plate 300, as shown in FIG. 10. Next, the protruding ends of the plurality of first electrode tabs 740_1, 740_2, 740_3 may be folded in the direction of the joints 312, 314 (X-axis direction) to come into contact with the upper surface of the collector plate 300. Due to this, some of the first electrode tab that is not welded to the collector plate 300 may also come into contact with the collector plate 300 and be electrically connected.

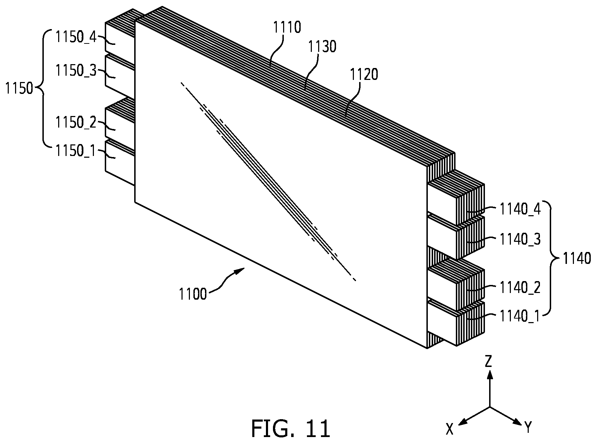

FIG. 11 is a perspective view showing an example of an electrode assembly including four tab groups according to embodiments of the present disclosure. Description of the configuration described with reference to FIG. 7 among the configuration shown in FIG. 11 is omitted.

According to embodiments, the electrode assembly 1100 may include a plurality of first electrode tabs 1140 and a plurality of second electrode tabs 1150. The plurality of first electrode tabs 1140 may include a first tab group 1140_1, a second tab group 1140_2, a third tab group 1140_3, and a fourth tab group 1140_4.

According to embodiments, the interval between the first tab group 1140_1 and the second tab group 1140_2 and the interval between the third tab group 1140_3 and the fourth tab group 1140_4 may be smaller than the interval between the second tab group 1140_2 and the third tab group 1140_3. However, the intervals among the first tab group 1140_1, the second tab group 1140_2, the third tab group 1140_3, and the fourth tab group 1140_4 are not limited to the embodiments and may be various.

According to embodiments, the width of the first tab group 1140_1, the width of the second tab group 1140_2, the width of the third tab group 1140_3, and the width of the fourth tab group 1140_4 may be equal to each other. However, the width of each of the first tab group 1140_1, the second tab group 1140_2, the third tab group 1140_3, and the fourth tab group 1140_4 is not limited to the embodiments and may be various.

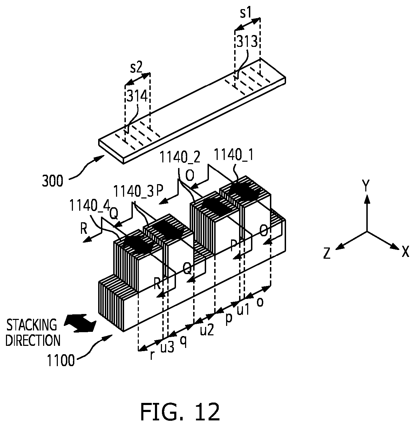

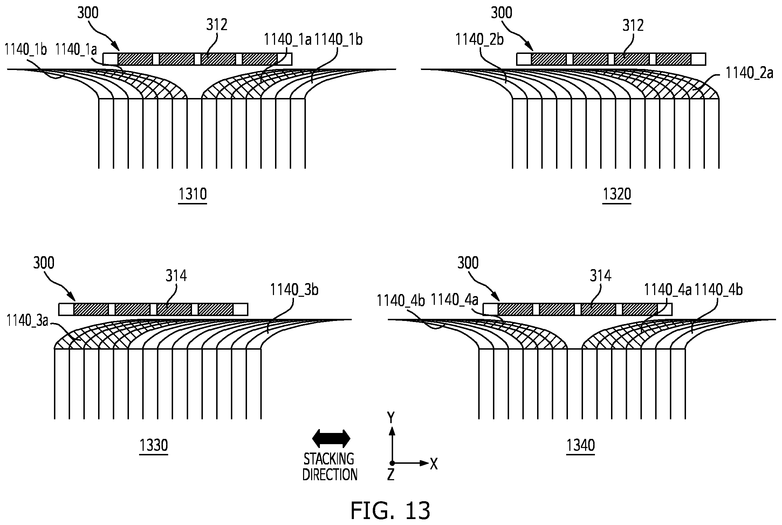

FIG. 12 is a perspective view showing an example before four tab groups are joined to a collector plate according to embodiments of the present disclosure, and FIG. 13 is a cross-sectional view showing an example in which the four tab groups are joined to the collector plate according to embodiments of the present disclosure. FIG. 13 shows examples of a cross-section 1310 taken along line O-O of FIG. 12, a cross-section 1320 taken along line P-P, a cross-section 1330 taken along line Q-Q, and a cross-section 1340 taken along line R-R, as viewed in the Z-axis direction. Description of the configurations described with reference to FIGS. 8 and 9 among the configurations shown in FIGS. 12 and 13 is omitted.

According to embodiments, the second tab group 1140_2 may be spaced apart from the first tab group 1140_1 by a predetermined interval, the third tab group 1140_3 may be spaced apart from the second tab group 1140_2 by a predetermined interval, and the fourth tab group 1140_4 may be spaced apart from the third tab group 1140_3 by a predetermined interval. Specifically, the interval u1 between the first tab group 1140_1 and the second tab group 1140_2 and the interval u3 between the third tab group 1140_3 and the fourth tab group 1140_4 may be smaller than the interval u2 between the second tab group 1140_2 and the third tab group 1140_3.

According to embodiments, the width o of the first tab group 1140_1, the width p of the second tab group 1140_2, the width q of the third tab group 1140_3, and the width r of the fourth tab group 1140_4 may be equal to each other. As another example, the width o of the first tab group 1140_1, the width p of the second tab group 1140_2, the width q of the third tab group 1140_3, and the width r of the fourth tab group 1140_4 may be different from each other.

According to embodiments, the first tab group 1140_1 and the second tab group 1140_2 may be located to correspond to the first joint 312, and the third tab group 1140_3 and the fourth tab group 1140_4 may be located to correspond to the second joint 314. Based on the Z-axis direction, the right end of the first tab group 1140_1 may be located to the right of the right end of the first joint 312, and the left end of the first tab group 1140_1 may be located to the left of the right end of the first joint 312. Based on the Z-axis direction, the right end of the second tab group 1140_2 may be located to the right of the left end of the first joint 312, and the left end of the second tab group 1140_2 may be located to the left of the left end of the first joint 312. Based on the Z-axis direction, the right end of the third tab group 1140_3 may be located to the right of the right end of the second joint 314, and the left end of the third tab group 1140_3 may be located to the left of the right end of the second joint 314. Based on the Z-axis direction, the right end of the fourth tab group 1140_4 may be located to the right of the left end of the second joint 314, and the left end of the fourth tab group 1140_4 may be located to the left of the left end of the second joint 314. However, the positions of the first tab group 1140_1, the second tab group 1140_2, the third tab group 1140_3, and the fourth tab group 1140_4 are not limited to the embodiment and may be various.

According to embodiments, a cross-section 1310 taken along line O-O of FIG. 12 is shown in FIG. 13. As shown in the cross-section 1310, the first tab group 1140_1 may be joined to the collector plate while at least some of the first tab group 1140_1 may be bent in a first direction and the others may be bent in a second direction. A cross-section 1320 taken along line P-P of FIG. 12 is shown in FIG. 13. As shown in the cross-section 1320, the second tab group 1140_2 may be bent in the first direction and joined to the collector plate. A cross-section 1330 taken along line Q-Q of FIG. 12 is shown in FIG. 13. As shown in the cross-section 1330, the third tab group 1140_3 may be bent in the second direction and joined to the collector plate. A cross-section 1340 taken along line R-R of FIG. 12 is shown in FIG. 13. As shown in the cross-section 1340, the fourth tab group 1440_1 may be joined to the collector plate while at least some of the fourth tab group 1140_1 may be bent in a first direction and the others may be bent in a second direction. The first direction and the second direction are parallel to the stacking direction (X-axis direction) of the electrode assembly 1100 and may be opposite to one another.

According to embodiments, as shown in FIG. 13, the first tab group 1140_1 and the second tab group 1140_2 may be laser welded to the first joint 312 of the collector plate 300, and the third tab group 1140_3 and the fourth tab group 1140_4 may be laser welded to the second joint 314 of the collector plate 300. After laser welding is completed, the first tab group 1140_1, the second tab group 1140_2, the third tab group 1140_3, and the fourth tab group 1140_4 may protrude outside the collector plate 300.

According to embodiments, as shown in the cross-section 1310, the first tab group 1140_1 may include welded tabs 1140_1a welded to the collector plate 300 and unwelded tabs 1140_1b. As shown in the cross-section 1320, the second tab group 1140_2 may include welded tabs 1140_2a welded to the collector plate 300 and unwelded tabs 1140_2b. As shown in the cross-section 1330, the third tab group 1140_3 may include welded tabs 1140_3a welded to the collector plate 300 and unwelded tabs 1140_3b. As shown in the cross-section 1340, the fourth tab group 1140_4 may include welded tabs 1140_4a welded to the collector plate 300 and unwelded tabs 1140_4b.

Due to the structural features described above, the unwelded tabs 1140_1b of the first tab group 1140_1 are complemented by the welded tabs 1140_2a of the second tab group 1140_2 and the welded tabs 1140_3a of the third tab group 1140_3, so that the electrode plate connected to the tabs may be electrically connected to the collector plate. The unwelded tabs 1140_2b of the second tab group 1140_2 are complemented by the welded tabs 1140_1a of the first tab group 1140_1, the welded tabs 1140_3a of the third tab group 1140_3, and the welded tabs 1140_4a of the fourth tab group 1140_4, so that the electrode plates connected to the tabs may be electrically connected to the collector plate. The unwelded tabs 1140_3b of the third tab group 1140_3 are complemented by the welded tabs 1140_1a of the first tab group 1140_1, the welded tabs 1140_2a of the second tab group 1140_2, and the welded tabs 1140_4a of the fourth tab group 1140_4, so that the electrode plates connected to the tabs may be electrically connected to the collector plate. The unwelded tabs 1140_4b of the fourth tab group 1140_4 are complemented by the welded tabs 1140_2a of the second tab group 1140_2 and the welded tabs 1140_3a of the third tab group 1140_3, so that the electrode plate connected to the tabs may be electrically connected to the collector plate. Due to this, the number of first electrode plates 1110 (see FIG. 11) that are not welded to the collector plate 300 may be reduced, thereby reducing the internal resistance of the secondary battery. In some embodiments, the current flowing through the substrate is evenly distributed, which may reduce deterioration of the secondary battery.

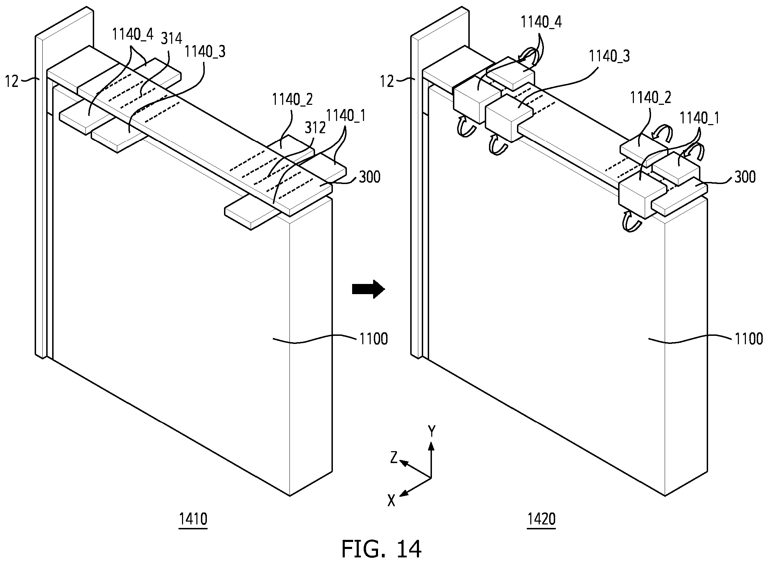

FIG. 14 is a perspective view showing an example in which four tab groups are folded to surround a collector plate according to embodiments of the present disclosure.

Referring to FIG. 14, at least some of the plurality of first electrode tabs 1140_1, 1140_2, 1140_3, 1140_4 are welded to the joints 312, 314, and the ends of the plurality of first electrode tabs 1140_1, 1140_2, 1140_3, 1140_4 protruding outside the collector plate 300 may be folded to surround the collector plate.

According to embodiments, after laser welding is completed, the ends of the plurality of first electrode tabs 1140_1, 1140_2, 1140_3, 1140_4 protrude in the width direction (X-axis direction) of the collector plate 300, and the protruding ends of the plurality of first electrode tabs 1140_1, 1140_2, 1140_3, 1140_4 may be folded upward (Y-axis direction) of the collector plate 300, as shown in FIG. 14. Next, the protruding ends of the plurality of first electrode tabs 1140_1, 1140_2, 1140_3, 1140_4 may be folded in the direction of the joints 312, 314 (X-axis direction) to come into contact with the upper surface of the collector plate 300. Due to this, some of the first electrode tab that is not welded to the collector plate 300 may also come into contact with the collector plate 300 and be electrically connected.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

The present disclosure additionally includes the following numbered embodiments:
1. A secondary battery (10) comprising:
   an electrode assembly (700) comprising a plurality of first electrode tabs (740) and a plurality of second electrode tabs (750); and
   a collector plate (300) joined to the plurality of first electrode tabs (740), wherein
   the plurality of first electrode tabs (740) comprises a first tab group (740_1),
   the first tab group (740_1) is joined to the collector plate (300) while at least some of the first electrode tabs in the first tab group (740_1) are bent in a first direction and the other first electrode tabs in the first tab group (740_1) are bent in a second direction, and
   the first direction and the second direction are substantially parallel to a stacking direction of the electrode assembly (700) and are substantially opposite to one another.
2. The secondary battery (10) according to embodiment 1, wherein
   the plurality of first electrode tabs (740) are joined to the collector plate (300) by laser welding.
3. The secondary battery (10) according to embodiment 1, wherein
   the collector plate (300) comprises joints (312, 314) to which the plurality of first electrode tabs (740) are joined.
4. The secondary battery (10) according to embodiment 3, wherein
   at least some of the first electrode tabs (740) are welded to the joints (312, 314), and ends of the plurality of first electrode tabs (740) protruding outside the collector plate (300) are folded to surround the collector plate (300).
5. The secondary battery (10) according to embodiment 1, further comprising:
   a tape (200) disposed to cover the electrode assembly (100) and the collector plate (300).
6. The secondary battery (10) according to embodiment 5, wherein
   a material of the tape (200) comprises an insulating material.
7. The secondary battery (10) according to embodiment 1, wherein
   the plurality of first electrode tabs (740) and the plurality of second electrode tabs (750) are formed on different sides of the electrode assembly (700).
8. The secondary battery (10) according to embodiment 3, wherein
   the joints (312, 314) comprise a first joint (312) and a second joint (314) formed spaced apart from a center of the collector plate (300), respectively.
9. The secondary battery (10) according to embodiment 8, wherein
   a length of the first joint (312) in a longitudinal direction of the collector plate (300) is approximately identical to a length of the second joint (312).
10. The secondary battery (10) according to embodiment 8, wherein
   the plurality of first electrode tabs (740) further comprise:
   a second tab group (740_2) spaced apart from the first tab group (740_1) by a predetermined interval, and
   a third tab group (740_3) spaced apart from the second tab group (740_2) by a predetermined interval.
11. The secondary battery (10) according to embodiment 10, wherein
   a width of the first tab group (740_1) is greater than a width of the second tab group (740_2) and a width of the third tab group (740_3).
12. The secondary battery (10) according to embodiment 10, wherein
   the plurality of first electrode tabs of the second tab group (740_2) are bent in the first direction and joined to the collector plate (300), and
   the plurality of first electrode tabs of the third tab group (740_3) are bent in the second direction and joined to the collector plate (300).
13. The secondary battery (10) according to embodiment 10, wherein
   the plurality of first electrode tabs (1140) further comprises a fourth tab group (1140_4) spaced apart from the third tab group (1140_3) by a predetermined interval.
14. The secondary battery according to embodiment 13, wherein
   a width of the first tab group (1140_1), a width of the second tab group (1140_2), a width of the third tab group (1140_3), and a width of the fourth tab group (1140_4) are identical to each other.
15. The secondary battery (10) according to embodiment 13, wherein
   the plurality of first electrode tabs of the second tab group (1140_2) are bent in the first direction and joined to the collector plate (300),
   the plurality of first electrode tabs of the third tab group (1140_3) are bent in the second direction and joined to the collector plate (300), and
   the plurality of first electrode tabs of the fourth tab group (1140_4) are joined to the collector plate (300) while at least some of the plurality of first electrode tabs of the fourth tab group (1140_4) are bent in the first direction and other of the plurality of first electrode tabs of the fourth tab group (1140_4) are bent in the second direction.

## Claims

1. A secondary battery (10) comprising:
an electrode assembly (700) comprising a plurality of first electrode tabs (740) and a plurality of second electrode tabs (750); and
a collector plate (300) joined to the plurality of first electrode tabs (740), wherein
the plurality of first electrode tabs (740) comprises a first tab group (740_1),
the first tab group (740_1) is joined to the collector plate (300) while at least some of the first electrode tabs in the first tab group (740_1) are bent in a first direction and the other first electrode tabs in the first tab group (740_1) are bent in a second direction, and
the first direction and the second direction are substantially parallel to a stacking direction of the electrode assembly (700) and are substantially opposite to one another.

2. The secondary battery (10) according to claim 1, wherein
the plurality of first electrode tabs (740) are joined to the collector plate (300) by laser welding.

3. The secondary battery (10) according to claim 1 or 2, wherein
the collector plate (300) comprises joints (312, 314) to which the plurality of first electrode tabs (740) are joined.

4. The secondary battery (10) according to claim 3, wherein
at least some of the first electrode tabs (740) are welded to the joints (312, 314), and ends of the plurality of first electrode tabs (740) protruding outside the collector plate (300) are folded to surround the collector plate (300).

5. The secondary battery (10) according to any one of claims 1 to 4, further comprising:
a tape (200) disposed to cover the electrode assembly (100) and the collector plate (300).

6. The secondary battery (10) according to claim 5, wherein
a material of the tape (200) comprises an insulating material.

7. The secondary battery (10) according to any one of claims 1 to 6, wherein
the plurality of first electrode tabs (740) and the plurality of second electrode tabs (750) are formed on different sides of the electrode assembly (700).

8. The secondary battery (10) according to claim 3, wherein
the joints (312, 314) comprise a first joint (312) and a second joint (314) each formed spaced apart from a center of the collector plate (300), respectively.

9. The secondary battery (10) according to claim 8, wherein
a length of the first joint (312) in a longitudinal direction of the collector plate (300) is approximately identical to a length of the second joint (312).

10. The secondary battery (10) according to any one of claims 1 to 8, wherein
the plurality of first electrode tabs (740) further comprises:
a second tab group (740_2) spaced apart from the first tab group (740_1) by a predetermined interval, and
a third tab group (740_3) spaced apart from the second tab group (740_2) by a predetermined interval.

11. The secondary battery (10) according to claim 10, wherein
a width of the first tab group (740_1) is greater than a width of the second tab group (740_2) and a width of the third tab group (740_3).

12. The secondary battery (10) according to claim 10 or 11, wherein
the plurality of first electrode tabs of the second tab group (740_2) are bent in the first direction and joined to the collector plate (300), and
the plurality of first electrode tabs of the third tab group (740_3) are bent in the second direction and joined to the collector plate (300).

13. The secondary battery (10) according to any one of claims 10 to 12, wherein
the plurality of first electrode tabs (1140) further comprises a fourth tab group (1140_4) spaced apart from the third tab group (1140_3) by a predetermined interval.

14. The secondary battery according to claim 13, wherein
a width of the first tab group (1140_1), a width of the second tab group (1140_2), a width of the third tab group (1140_3), and a width of the fourth tab group (1140_4) are identical to each other.

15. The secondary battery (10) according to claim 13 or 14, wherein
the plurality of first electrode tabs of the second tab group (1140_2) are bent in the first direction and joined to the collector plate (300),
the plurality of first electrode tabs of the third tab group (1140_3) are bent in the second direction and joined to the collector plate (300), and
the plurality of first electrode tabs of the fourth tab group (1140_4) are joined to the collector plate (300) while at least some of the plurality of first electrode tabs of the fourth tab group (1140_4) are bent in the first direction and others of the plurality of first electrode tabs of the fourth tab group (1140_4) are bent in the second direction.
